# EUROPÄISCHE PATENTSCHRIFT

(11) **EP 1 094 583 B1**
(45) Veröffentlichungstag und Bekanntmachung des Hinweises auf die Patenterteilung: **10.03.2004**
(21) Anmeldenummer: 00118339.1
(22) Anmeldetag: 24.08.2000
(51) Int. Cl.: H02G 3/10

(54) **Geräteträger für Sockelleisten-Installationskanäle**
Apparatus holder for installation plinth
Porte appareillage pour plinthe d'installation éléctrique

(30) Priorität: 23.10.1999 DE 29918680 U
(43) Veröffentlichungstag der Anmeldung: 25.04.2001
(73) Patentinhaber: Tehalit GmbH & Co. KG, 67716 Heltersberg (DE)
(72) Erfinder: Eberle, Patrick, 66292 Riegelsberg (DE); Klöckner, Oliver, 66976 Rodalben (DE); Schmitt, Dieter, 66440 Altheim (DE)
(74) Vertreter: Patentanwälte Möll und Bitterich

(56) Entgegenhaltungen:
- DE-A- 4 315 352
- DE-C- 4 432 669

## Beschreibung

Die Erfindung betrifft Geräteträger zur Benutzung mit Sockelleistenkanälen gemäß dem Oberbegriff des Anspruchs 1.

Aus der DE-C 44 32 669 ist ein Geräteträger zur Benutzung mit Sockelleistenkanälen unterschiedlicher Höhe bekannt Er umfaßt eine Montageplatte, die oberhalb des Sockelleistenkanals an der Wand befestigt werden kann und die an ihrer Oberseite Haltepfosten besitzt, an denen Elektroinstallationsgeräte, beispielsweise Steckdosen, angeschraubt werden können. Eine an der Unterseite der Montageplatte angebrachte Schürze überdeckt den Sockelleistenkanal und stellt so die elektrische Trennung sicher. Eine aufsetzbare Haube überdeckt Montageplatte, Gerät, Schürze und Kanal. Ein Ausschnitt in der Haube ermöglicht den Zugang zum Installationsgerät.

Um diesen Geräteträger mit Kanälen unterschiedlicher Höhe verwenden zu können, können in die Seitenwände der Haube Abdeckschieber unterschiedlicher Breite eingesteckt werden.

Oftmals besteht die Notwendigkeit, Installationsgeräte mit unterschiedlichen Höhenabmessungen zu montieren. Dies bedeutet, daß mehrere Grundplatten mit entsprechend angepassten Pfosten vorgehalten werden müssen. Dies hat einen erhöhten Fertigungs-, Lager-, Bestell- und Montageaufwand zur Folge. Oftmals merkt der Elektroinstallateur erst auf der Baustelle, daß er die falsche Grundplatte bestellt hat, was die Montagearbeiten auf der Baustelle erheblich verzögert. Dies ist unbefriedigend.

Neben den Elektro-Installationsgeräten, die mit Schrauben befestigt werden, wie dies bei dem oben beschriebenen Geräteträger der Fall ist, gibt es auch frontrastende Elektro-Einbaugeräte. Diese sind mit federnden Rastvorrichtungen ausgerüstet, die sich hinter einem passenden Einbaurahmen aufspreizen und so die Haltefunktion bewirken. Um Sockelleistenkanäle mit derartigen Einbaugeräten bestücken zu können, müssen die Geräteträger mit einem entsprechenden Einbaurahmen versehen sein. Dieser muß sich in geeigneter Höhe über der Montageplatte befinden, mit deren Hilfe der Geräteträger an der Gebäudewand befestigt wird. Der Einbaurahmen ist zu diesem Zweck mit Abstandsfüßen mit der Montageplatte verbunden. Dies erschwert die Montage an der Wand ebenso wie die Herstellung der Elektroanschlüsse zwischen den Elektroleitungen und dem Gerät. Da es die frontrastenden Einbaugeräte auch mit unterschiedlichen Höhenabmessungen gibt, müssen die Geräteträger mit unterschiedlichen Abmessungen produziert werden. Es ergeben sich damit dieselben Nachteile wie oben beschrieben.

Der vorliegenden Erfindung liegt die Aufgabe zugrunde, einen Geräteträger der eingangs genannten Art anzugeben, der sich sehr viel einfacher fertigen läßt und der vor allem die Montagezeiten auf der Baustelle erheblich verkürzt

Diese Aufgabe wird durch einen Geräteträger mit den Merkmalen des Anspruchs 1 gelöst.

Der vorliegenden Erfindung liegt das Erfindungsprinzip zugrunde, daß die Montageplatte, die an der Gebäudewand befestigt wird, und die Haltevorrichtung, die das frontrastende Einbaugerät aufnimmt, getrennt hergestellt und erst auf der Baustelle miteinander verbunden werden. Dank der schwenkbaren Anlenkung der Füße am Einbaurahmen sind die Elektroanschlüsse des Einbaugeräts optimal zugänglich. Durch geeignete Formgebung der korrespondierenden Halte- und Fußprofile einerseits und der Berührungsflächen zwischen Einbaurahmen und Füßen andererseits ergibt sich im fertigen Zustand ein äußerst stabiles Gebilde.

Gemäß einer Weiterbildung der Erfindung sind die Fußprofile T-förmig. Diese Form erlaubt eine einfache Montage und ergibt eine feste Verbindung.

Vorzugsweise ist die Montageplatte als Montagerahmen ausgebildet, in dessen gegenüberliegenden Stirnflächen die Halteprofile eingeformt sind.

Vorzugsweise sind die Füße mittels Filmscharnier am Einbaurahmen angelenkt.

Anhand der Zeichnung soll die Erfindung in Form eines Ausführungsbeispiels erläutert werden. Es zeigen
- Fig. 1: rein schematisch und als Explosionsdarstellung einen Geräteträger auf einem Sockelleistenkanal;
- Fig. 2: die wesentlichen Teile des Geräteträgers in vergrößerter Explosionsdarstellung und
- Fig. 3: die wesentlichen Teile des Geräteträgers in fertig montiertem Zustand.

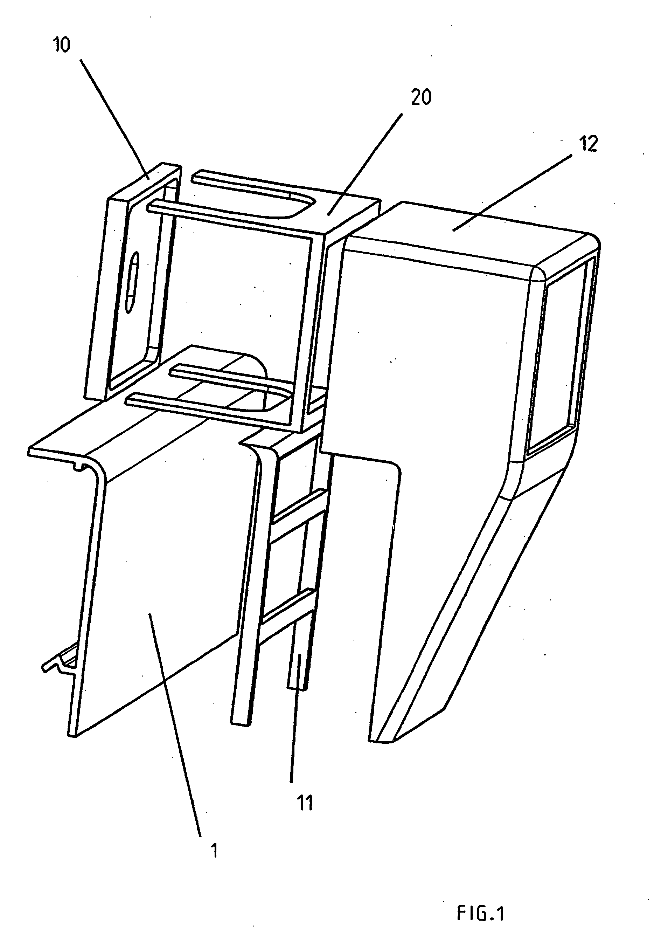

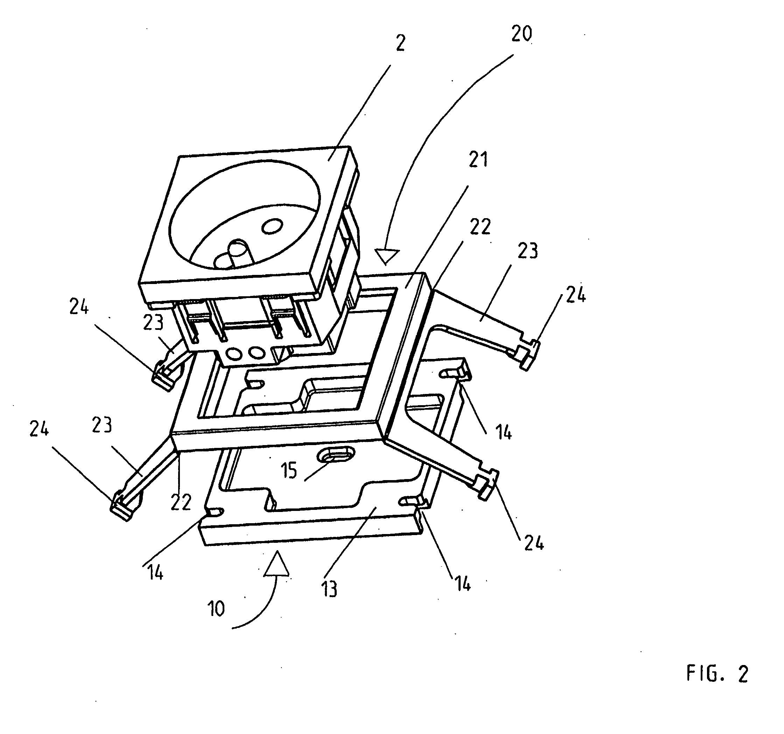

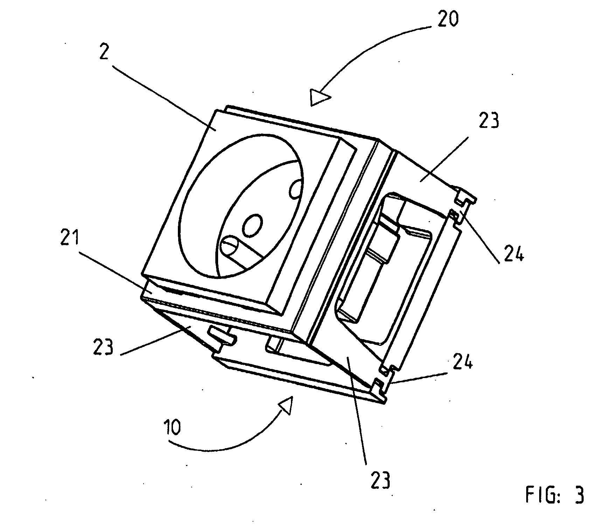

Fig. 1 zeigt in perspektivischer Darstellung einen Deckel 1 eines Sockelleistenkanals und - als Explosionsdarstellung und rein schematisch - einen dazu passenden Geräteträger für frontrastende Elektro-Installationsgeräte. Der Geräteträger umfaßt im wesentlichen eine Montageplatte 10, die oberhalb des Sockelleistenkanals 1 an eine Gebäudewand angeschraubt wird, eine Schürze 11, die den Kanal überdeckt und für die elektrische Trennung sorgt, eine Haltevorrichtung 20, die ein Elektro-Installationsgerät 2 (Fig. 2 und 3) aufnimmt, und eine Haube 12, die Kanal, Montageplatte 10, Schürze 11, Haltevorrichtung 20 und das Gerät 2 abdeckt. Ein Ausschnitt in der Front der Haube 12 ermöglicht den Zugang zum Gerät 2.

Fig. 2 zeigt als Explosionsdarstellung die wesentlichen Teile des Geräteträgers der Figur 1. Man erkennt zunächst die Montageplatte 10, hier als Montagerahmen 13 gestaltet und mit Bohrungen 15 für Halteschrauben versehen.

Oberhalb der Montageplatte 10 erkennt man die Haltevorrichtung 20. Diese umfaßt im wesentlichen einen Einbaurahmen 21, der das frontrastende Gerät 2 aufnimmt. An zwei gegenüberliegenden Seiten des Einbaurahmens 21 sind mittels Filmschamier 22 Füße 23 angelenkt. T-förmige Fußprofile 24 korrespondieren mit entsprechenden Halteprofilen 14 an den Stirnseiten des Montagerahmens 13.

Dank der klappbaren Füße 23 sind die Elektroanschlußvorrichtungen an der Unterseite des Geräts 2 auch nach dem Einschnappen des Geräts 2 in den Einbaurahmen 21 optimal zugänglich.

Fig. 3 zeigt die Situation nach erfolgter Montage. Die Fußprofile 24 sind in die Halteprofile 14 eingeschoben. Durch die T-Form der Fußprofile 24 und durch die flächige Gestaltung der Berührungsflächen zwischen den Füßen 23 und dem Halterahmen 21 ergibt sich eine sehr stabile Konstruktion. Sobald die Haube 12 aufgeschoben ist, sind die Fußprofile 24 am Montagerahmen 13 fixiert.

## Patentansprüche

1. Geräteträger zur Benutzung mit Sockelleistenkanälen (1), im wesentlichen umfassend:
- eine Montageplatte (10)
- eine Haltevorrichtung (20) für ein Elektro-Installationsgerät (2)
- gegebenenfalls eine den Kanal (1) übergreifende, isolierende Schürze (11)
- und eine auf die Montageplatte (10) aufsetzbare und dabei den Kanal (1), die Schürze (11), die Haltevorrichtung (20) und das Gerät (2) überdeckende Haube (12),
- das Gerät (2) ist frontrastend,
**gekennzeichnet durch** die Merkmale
- die Haltevorrichtung (20) umfaßt
-- einen Einbaurahmen (21) mit einer zum Gerät (2) passenden Öffnung
-- und wenigstens zwei Füße (23),
- die Füße (23) sind
-- am Einbaurahmen (21) schwenkbar angelenkt
-- mit einem Fußprofil (24) versehen
- die Montageplatte (10) trägt Halteprofile (14), die mit den Fußprofilen (24) korrespondieren.

2. Geräteträger nach Anspruch 1, **gekennzeichnet durch** das Merkmal
- die Fußprofile (24) sind T-förmig.

3. Geräteträger nach Anspruch 1 oder 2, **gekennzeichnet durch** die Merkmale
- die Montageplatte (10) ist als Montagerahmen (13) ausgebildet,
- die Halteprofile (14) sind in gegenüberliegende Stimflächen des Montagerahmens (13) eingeformt.

4. Geräteträger nach Anspruch 1, 2 oder 3, **gekennzeichnet durch** das Merkmal
- die Füße (23) sind mittels Filmscharnier (22) am Einbaurahmen (21) angelenkt.

## Claims

1. Apparatus holder for use with skirting trunking (1), essentially comprising:
- a mounting plate (10),
- a retaining device (20) for an electrical installation apparatus (2),
- optionally an insulating apron (11) engaging over the trunking (1)
- and a hood (12) which can be placed on the mounting plate (10) and then covers the trunking (1), the apron (11), the retaining device (20) and the apparatus (2),
- the apparatus (2) is front-locking,
**characterised by** the features
- the retaining device (20) comprises
-- a built-in frame (21) with an opening which matches the apparatus (2)
-- and at least two feet (23),
- the feet (23) are
-- pivotably articulated to the built-in frame (21),
-- provided with a foot profile (24),
- the mounting plate (10) bears retaining profiles (14) which correspond with the foot profiles (24).

2. Apparatus holder according to Claim 1, **characterised by** the feature
- the foot profiles (24) are T-shaped.

3. Apparatus holder according to Claim 1 or 2, **characterised by** the features
- the mounting plate (10) is formed as a mounting frame (13),
- the retaining profiles (14) are shaped into opposite end faces of the mounting frame (13).

4. Apparatus holder according to Claim 1, 2 or 3,
**characterised by** the feature
- the feet (23) are articulated to the built-in frame (21) by means of film hinges (22).

## Revendications

1. Support d'appareillage pour utilisation avec des goulottes en forme de plinthe (1) comprenant essentiellement :
- une plaque de montage (10)
- un dispositif de réception (20) pour un appareillage d'installation électrique (2)
- le cas échéant une jupe (11) isolante recouvrant la goulotte (1)
- et un capot (12) pouvant être monté sur la plaque de montage (10) et coiffant ce faisant la goulotte (1), la jupe (11), le dispositif de réception (20) et l'appareillage (2),
- l'appareil (2) étant à encliquetage frontal,
**caractérisé par le fait que**
- le dispositif de réception (20) comprend
- un cadre d'encastrement (21) avec une ouverture adaptée à l'appareillage (2)
- et au moins deux pieds (23),
- les pieds (23) sont
- montés de manière pivotable sur le cadre d'encastrement (21)
- munis d'un profil de pied (24)
- la plaque de montage (10) porte des profils de réception (14) qui correspondent aux profils de pied (24).

2. Support d'appareillage selon la revendication 1, **caractérisé par le fait que**
- les profils de pied (24) sont en forme de T.

3. Support d'appareillage selon la revendication 1 ou 2, **caractérisé par le fait que**
- la plaque de montage (10) est formée en tant que cadre de montage (13),
- les profils de réception (14) sont formés dans des faces terminales opposées du cadre de montage (13).

4. Support d'appareillage selon la revendication 1, 2 ou 3, **caractérisé par le fait que**
- les pieds (23) sont articulés au moyen de charnières films (22) sur le cadre d'encastrement (21).
